# EUROPEAN PATENT APPLICATION

(11) **EP 4 734 476 A1**
(43) Date of publication of application: **29.04.2026**
(21) Application number: 24209152.8
(22) Date of filing: 28.10.2024
(51) Int. Cl.: H04L 65/1016, H04L 65/102, H04L 65/1069, H04B 7/185, H04L 61/5007, H04L 61/5046

(54) **DEVICE AND METHOD FOR PROVIDING COMMUNICATION BETWEEN MOBILE TERMINALS SERVED BY SATELLITES**

(71) Applicant: NTT DOCOMO, INC., Tokyo 100-6150 (JP)
(72) Inventor: MUTIKAINEN, Jari, 80687 Munich (DE); BHATTACHARJEE, Sushmit, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to one embodiment, a method for providing communication between a first mobile terminal served by a first satellite and a second mobile terminal served by a second satellite is described, wherein the first satellite implements a first media access gateway, the method comprising checking whether there is connectivity between the first media access gateway and the second satellite and, in response to a detection that there is connectivity between the first media access gateway and the second satellite, setting the first mobile terminal to use a first Internet Protocol address of the first media access gateway under which the first mobile terminal can reach the first media access gateway for communication with the second mobile terminal and setting a second media access gateway implemented in the second satellite or the second mobile terminal to use a second Internet Protocol address under which the first media access gateway can be reached via the second satellite.

## Description

The present disclosure relates to devices and methods for providing communication between mobile terminals served by satellites.

A mobile communication network may use regenerative-based satellite access. This means that a satellite has an onboard base station and can thus act as a serving base station for a radio cell, which is for example remotely located from other, ground-based, base stations of the mobile communication network. It is also possible that multiple satellites providing base stations in that manner are connected via satellite links, such that a satellite constellation of more than one satellite may operate multiple radio cells of a mobile communication network. A special feature in such a satellite-based communication scenario (i.e. where one or more satellites act as base station(s)) is local (onboard) routing, where traffic between mobile terminals served by one or more satellites is routed with a satellite or a satellite constellation without transiting via a ground segment, i.e. a ground-based part of the mobile communication network. Efficient approaches to provide and use this feature are desirable.

According to one embodiment, a method for providing communication between a first mobile terminal served by a first satellite and a second mobile terminal served by a second satellite is provided, wherein the first satellite implements a first media access gateway, the method comprising checking whether there is connectivity between the first media access gateway and the second satellite and, in response to a detection that there is connectivity between the first media access gateway and the second satellite, setting the first mobile terminal to use a first Internet Protocol address of the first media access gateway under which the first mobile terminal can reach the first media access gateway for communication with the second mobile terminal and setting a second media access gateway implemented in the second satellite or the second mobile terminal to use a second Internet Protocol address under which the first media access gateway can be reached via the second satellite.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system according to an embodiment.
- Figure 2: illustrates a scenario where the functionality of one or more base stations is provided by one or more satellites.
- Figure 3: illustrates a communication scenario as in figure 2 from a PDU (packet data unit) session establishment perspective.
- Figure 4: illustrates a setup of a communication between two mobile terminals according to an embodiment.
- Figure 5: illustrates a connectivity check from a user plane perspective.
- Figure 6: illustrates a mobility procedure for a mobile terminal in a scenario as illustrated in figure 2 and figure 3.
- Figure 7: illustrates a change of a serving satellite for a mobile terminal.
- Figure 8: shows a flow diagram illustrating a method for providing communication between a first mobile terminal served by a first satellite and a second mobile terminal served by a second satellite according to an embodiment.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

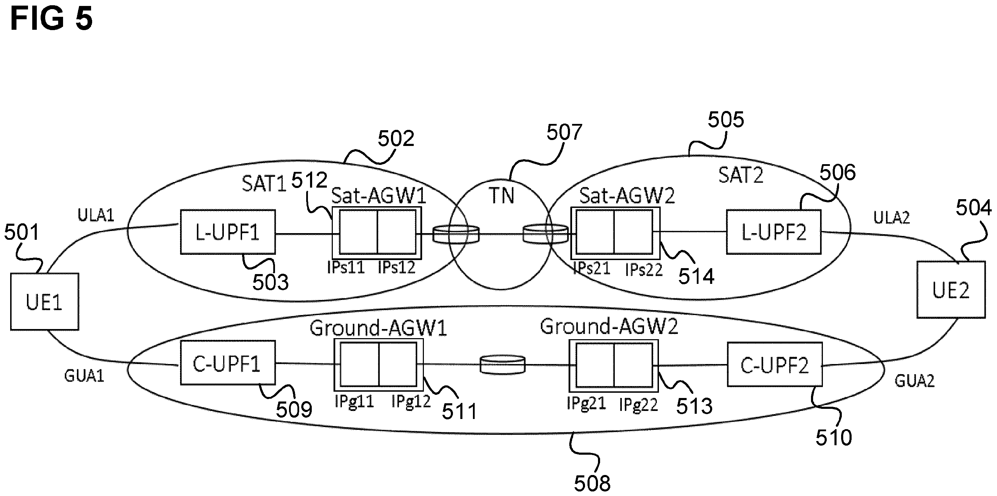

Various examples corresponding to aspects of this disclosure are described below:
Example 1 is a method for providing communication between a first mobile terminal served by a first satellite and a second mobile terminal served by a second satellite wherein the first satellite implements a first media access gateway, the method comprising checking whether there is connectivity between the first media access gateway and the second satellite and, in response to a detection that there is connectivity between the first media access gateway and the second satellite
   - setting the first mobile terminal to use a first Internet Protocol address of the first media access gateway under which the first mobile terminal can reach the first media access gateway for communication with the second mobile terminal and
   - setting a second media access gateway implemented in the second satellite or the second mobile terminal to use a second Internet Protocol address under which the first media access gateway can be reached via the second satellite.
Example 2 is the method of example 1, wherein the checking whether there is connectivity comprises sending a first Internet Protocol packet from the second Internet Protocol address of the first media access gateway to the second media access gateway or the second mobile terminal and, in case there is connectivity between the first media access gateway and the second satellite (i.e. in case the check is successful) receiving a second Internet Protocol packet (directed to the second IP address) as a response to the first Internet Protocol packet from the second media access gateway or the second mobile terminal.
Example 3 is the method of example 1 or 2, comprising implementing the first media access gateway in the first satellite.
Example 4 is the method of any one of examples 1 to 3, comprising implementing the first media access gateway in the first satellite in response to a request for a communication session between the first mobile terminal and the second mobile terminal.
Example 5 is the method of example 4, comprising implementing the first media access gateway in the first satellite depending on requirements of the communication session.
Example 6 is the method of example 4 or 5, wherein the communication session is an Internet Multimedia Subsystem session.
Example 7 is the method of any one of examples 1 to 6, comprising assigning the first Internet Protocol address and the second Internet Protocol address to the first media access gateway (e.g. by a P-CSCF; the other IP addresses of media access gateways mentioned herein may also be assigned by P-CSCFs as described the exemplary embodiments).
Example 8 is the method of any one of examples 1 to 7, comprising, in response to a detection that there is no connectivity between the first media access gateway and the second satellite,
   - setting the first mobile terminal to use a third Internet Protocol address (IPg11 in the example of figure 5) of a third media access gateway implemented in a ground network under which the first mobile terminal can reach a third media access gateway for communication with the second mobile terminal; and
   - setting a fourth media access gateway (implemented in the ground network) or the second mobile terminal to use a second Internet Protocol address (IPg12 in the example of figure 5) under which the third media access gateway can be reached via the ground network (for communication with the first mobile terminal).
Example 9 is the method of example 8, wherein the ground network implements the fourth media access gateway and the method comprises, in response to a detection that there is no connectivity between the first media access gateway and the second satellite, setting the second mobile terminal to use a fifth Internet Protocol address (IPg22 in the example of figure 5) of the fourth media access gateway under which the second mobile terminal can reach the fourth media access gateway for communication with the first mobile terminal and setting the third media access gateway to use a sixth Internet Protocol address (IPg21 in the example of figure 5) under which the fourth media access gateway can be reached via the ground network.
Example 10 is the method of any one of examples 1 to 9, wherein the checking includes performing an Interactive Connectivity Establishment connectivity check.
Example 11 is the method of example 10, wherein the Interactive Connectivity Establishment connectivity check includes a candidate pair comprising the first Internet Protocol address of the first media access gateway and an Internet Protocol address of the second media access gateway or an Internet Protocol address of the second mobile terminal.
Example 12 is the method of any one of examples 1 to 11, wherein checking whether there is connectivity between the first media access gateway and the second satellite includes checking whether there is connectivity between the first media access gateway and the second satellite via an inter-satellite link between the first satellite and the second satellite.
Example 13 is the method of any one of examples 1 to 12, wherein the second satellite implements the second media access gateway and the method comprises checking whether there is connectivity between the second media access gateway and the first media access gateway and, in response to a detection that there is connectivity between the second media access gateway and the first media access gateway, setting the second mobile terminal to use a seventh Internet Protocol address (IPs22 in the example of figure 5) of the second media access gateway under which the second mobile terminal can reach the second media access gateway for communication with the first mobile terminal; and setting the first media access gateway to use an eighth Internet Protocol address (IPs21 in the example of figure 5) under which the second media access gateway can be reached by the first media access gateway.
Example 14 is a communication control component configured to perform the method of any one of examples 1 to 13.
Example 15 is a communication control component of example 14, wherein the communication control component is a Proxy Call Session Control Function (serving the first mobile terminal).

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

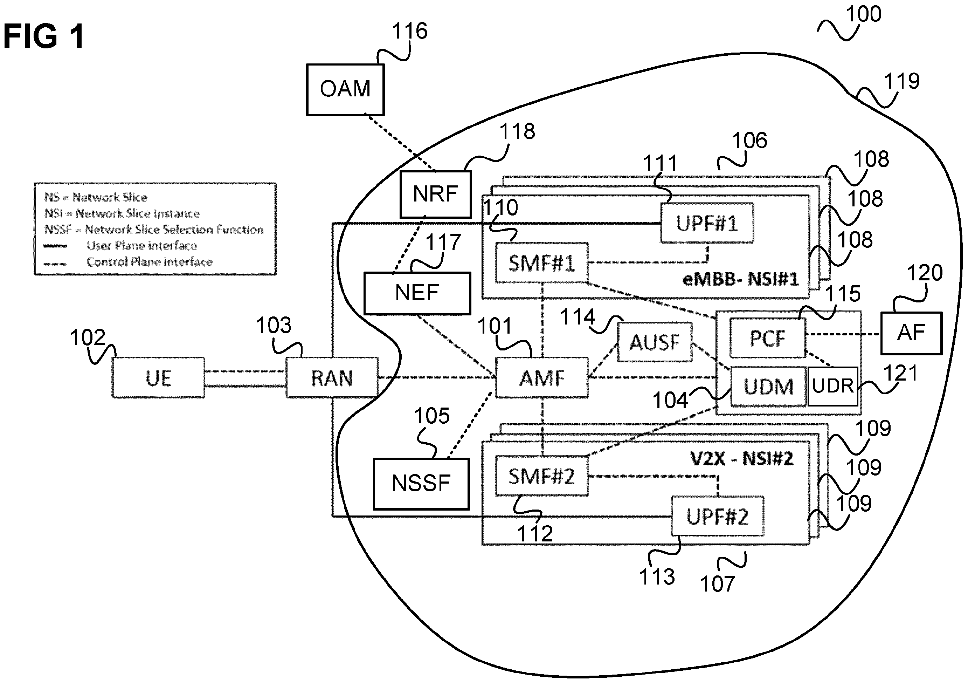

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository) 121. The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

The Network Slice Selection Assistance Information (NSSAI) represents a set of parameters used to identify and describe a (core) network slice. It includes two key elements:
- Slice Differentiator (SD): it is a globally unique identifier that distinguishes between different network slices within a 5G network. The SD is used to ensure that the UE selects the correct slice during communication.
- Slice Service Type (SST): it indicates the specific service or application type associated with a network slice. The SST provides high-level information about the characteristics and requirements of a slice, such as low latency, high bandwidth, or ultra-reliable communication.

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice. In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function). The core network 119 may further include a Network Exposure Function (NEF) 117.

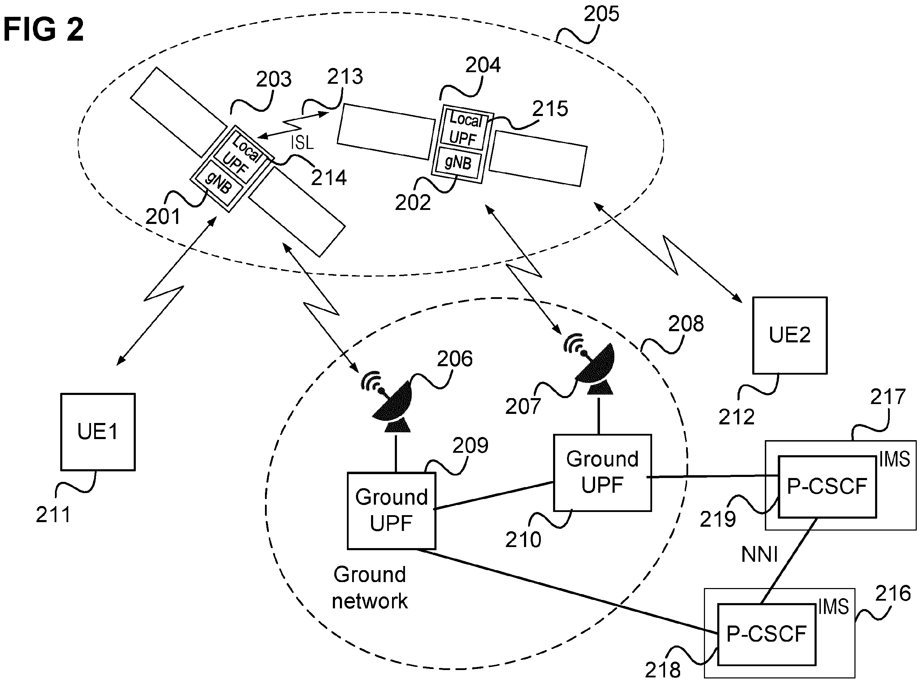

Base stations may be implemented by satellites. This means that communication between UEs under the coverage of one or more serving satellites can be supported, using regenerative-based satellite access (onboard gNBs). Such a scenario is illustrated in figure 2.

Figure 2 illustrates a scenario where the functionality of one or more base stations 201, 202 is provided by one or more satellites 203, 204.

In the example of figure 1, a first satellite 203 provides a first base station (gNB) 201 and a second satellite 204 provides a second base station 202. The two satellites 203, 204 form a satellite constellation 205 (which may have one or more satellites).

Each satellite 203, 204 is connected via a respective satellite antenna 206, 207 to a ground network 208 which includes a core network of the mobile communication network to the RAN of which the base stations 201, 202 belong.

The ground network 208 in particular includes a ground UPF 209, 210 for each satellite 203, 204 (which may also be the same ground UPF for each satellite 206, 207).

In the example of figure 2, the first base station 201 serves a first UE 211 and the second base station 202 serves a second UE 212, i.e. the first base station 201 operates a radio cell in which the first UE 211 is located and the second base station 202 operates a radio cell in which the second UE 212 is located. In other words, the first satellite 203 is the serving satellite for the first UE 211 and the second satellite 204 is the serving satellite for the second UE 212.

For communication between UEs 211, 212 served by satellite, i.e. communication (e.g. call) between two UEs 211, 212 via at least one satellite (i.e. at least one of them being served by a satellite as base station), a ground UPF 209, 210 is selected by the respective SMF 110, 112 and acts as a PDU session anchor (PSA).

When the first UE 211 and the second UE 212 are communicating, e.g. the first UE 211 sends user data (i.e. user plane traffic, e.g. media data) to the second UE 212, the (user) data is transmitted from the first UE 211 to the first satellite 203, can then be sent to the ground network 208, from there to the second satellite 204 and from there to the second UE 212. This is referred to as satellite-based communication via the ground segment.

If, however, the two satellites 203, 204 can communicate via an inter-satellite link (ISL) 213 or if the same satellite serves both UEs 211, 212 delivery delay of data (i.e. user plane traffic) can be reduced by routing the (user) data locally within the satellite constellation 205 (possibly within the same satellite if it is serving both UEs 211, 212). This is denoted by "local (onboard) routing (of traffic)" or "UE-SAT-UE communication", "local media routing" or "optimized routing of traffic" and may for example be of interest for delay-sensitive services. In other words, UE-Satellite(SAT)-UE communication refers to a communication between UEs under the coverage of one or more serving satellites, using satellite access without the user traffic transiting through the ground segment. UE-SAT-UE communication is expected to reduce end-to-end delay in the order of tens of milliseconds.

For the UE-SAT-UE communication, the SMF 110, 112 inserts an onboard (i.e. on-satellite) "local" UPF 214, 215 (acting as local PSA or "L-PSA") during call setup procedures providing a local switching capability.

For UE-SAT-UE communication for, e.g., an IMS (Internet Protocol Multimedia Subsystem) session (e.g. call), with two serving satellites 203, 204, i.e. UEs 211 and 212 being served by different satellites, to use UE-SAT-UE communication, it is necessary that there is an ISL 213 between the two satellites 203, 204, i.e. direct IP connectivity needs to be present between the satellites 203, 204. According to various embodiments, in the scenario of figure 2, for an IMS call via an IMS 216 serving the first UE 211 and a second IMS 217 serving the second UE (wherein the two IMS may also be the same IMS), each IMS 216, 217 comprises a respective P-CSCF (proxy call session control function) 218, 219 which determines that UE-Satellite-UE communication between the UEs 211, 212 is possible if the two satellites 203, 204 can communicate with each other.

In the following, approaches are described to determine whether there is such a kind of inter-satellite connectivity and to set up communication between two UEs 211, 212 accordingly.

In this context, it should be noted that verifying and comparing the satellite identifiers of the two satellites 203, 204 alone is typically not sufficient to determine whether there is (direct) satellite-to-satellite connectivity (i.e. inter-satellite connectivity) since the inter-satellite connectivity depends on whether there is an Inter-Satellite Link (ISL) available between the satellites. Since satellites used in a scenario like the one shown in figure 2 are typically low earth orbit (LEO) satellites, the presence of an ISL depends on the current location of the satellites (i.e. the connectivity is constantly changing when the satellites move). Accordingly, identifying the serving satellites alone is not sufficient to determine whether there is inter-satellite connectivity.

Further, determining the presence of inter-satellite connectivity based on a (static) pre-configuration that describes the connectivity between all satellites within the satellite constellation may not be desirable either, because this kind of satellite-operator specific information should possibly not be available to the IMS operator, and it may not reliably reflect the connectivity in practical application.

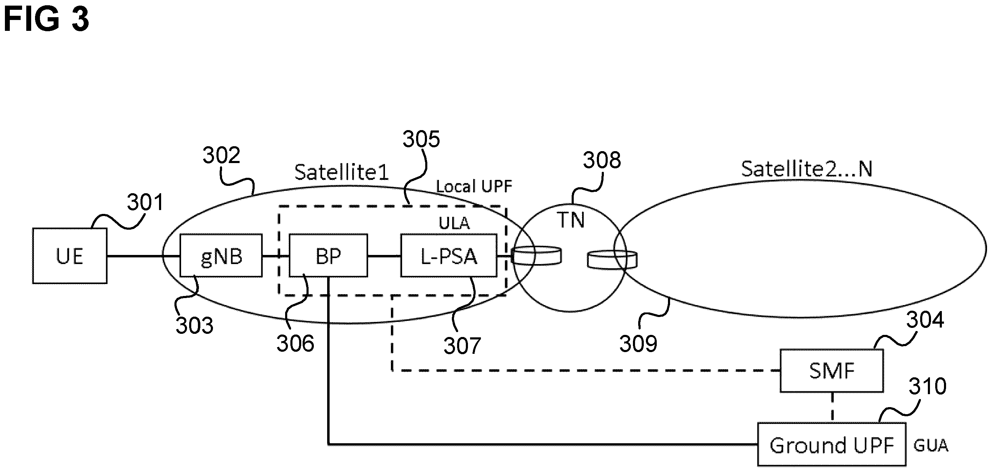

Figure 3 illustrates a communication scenario as in figure 2 from a PDU (packet data unit) session establishment perspective.

As in figure 2, a first UE 301 (e.g. corresponding to UE 211) is served by a first satellite 302, in particular by a base station (gNB) 303 implemented in the first satellite 302. As explained above, an SMF 304 (e.g. of ground network 208) allocates a local UPF 305 for a PDU session to be established in the first satellite 302. The local UPF 305 acts as BP (multi-homing branching point) 306 and as L-PSA (local PDU session anchor) 307. The L-PSA 307 is connected via a satellite transport network 308 (e.g. implemented by ISL 213) to a second satellite 309 (or, similarly, to multiple other satellites), configured similarly as the first satellite. The BP 306 is connected to a ground UPF 310 (e.g. corresponding to the ground UPF 209 of figure 2).

For the following embodiments, it is assumed that the UE 301 (and also a possible peer UE, e.g. the second UE 212, for which the following may be applied as well for communication between the two UEs) supports IPv6 multi homing, i.e. multiple IPv6 addresses within a single PDU Session and SSC (Session and Service Continuity) mode 3 as described in 3GPP TS 23.501.

The SMF 304 assigns a ULA (Unique Local Unicast Address) IPv6 address hosted in the local UPF 305 in the first satellite 302. This can be seen as an IP address assigned to the satellite or as an IP address assigned to the first UE 301 for the satellite communication path (also referred to as media path, e.g. for audio or video media in an IMS session).

The satellite TN 308 provides connectivity between the UE IPv6 ULA addresses (i.e. of the UE 301 and its peer UE) within the same satellite constellation. Another address, the GUA (Global Unicast Address), is hosted by the ground UPF 310 (from the IP address pool assigned by respective mobile network operator). This can be seen as an IP address assigned to the ground network or as an IP address assigned to the first UE 301 for the ground communication path.

The Branching Point (BP) 306 routes the UL (uplink) traffic received from the first UE 301 either to the local 305 UPF or the ground UPF 310 based on the source UE IP address (i.e. the first UE's address), as defined in 3GPP TS 23.501 and 3GPP TS 23.502. The source UE IP address can be either the ULA or the GUA. If the first UE 301 sends a packet from the ULA (i.e. using the ULA as source UE IP address) the BP 306 knows to route it to the L-PSA 307. If the UE sends a packet from the GUA (i.e. using the GUA as source UE IP address) the BP 306 routes it to the ground UPF (implementing a ground PSA) 306.

It should be noted that it is possible that the SMF 304 assigns a GUA to the satellite instead of an ULA. The use of ULA address is one option for an IP address assigned to the satellite but two GUA addresses could be used to distinguish the satellite and the ground network. For ease of distinction, it is in the following assumed that the satellite (path) has an ULA assigned to it and the ground (path) has a GUA assigned to it.

When the first UE 301 initiates an IMS session, it uses the GUA (assigned from the ground UPFs) in SIP signalling with the IMS (e.g. IMS 216) as source UE IP address.

For an IMS session, the UEs 211, 212 act as SIP (session initiation protocol) clients. According to various embodiments, the SIP clients use the IETF (Internet Engineering Task Force) ICE (Interactive Connectivity Establishment) methods (as described in RFC (Request for Comments) 8839 and RFC 8445) to provide both the ULA and GUA addresses as the ICE address candidates (in the SDP "a=candidate" attribute) to each other in an SDP Offer and Answer. After each SIP client has learned the candidate addresses from its respective peer, the clients perform ICE connectivity checks with the IP addresses as described in RFC 8445.

If the connectivity check succeeds for the ULA addresses (i.e. UEs are served by the same satellite, or in the same constellation and an ISL is available between the satellites), the ULA addresses are selected for the for the media path, i.e. for the communication (i.e. the first UE is set to be reached by the first satellite's ULA and the second UE is set to be reached by the second satellite's ULA).

The preference between candidates is described in IETF RFC 6724. Based on it, by default, GUA destinations are preferred over ULA destinations. The mechanisms in RFC 4191 can be used to provide route preferences from the network to the host (UE).

Accordingly, it is assumed here that the 5G core network (SMF, UPF) provides a preference to the UE to prefer the ULA over the GUA.

If the ICE connectivity check for the ULA addresses fails, the GUA addresses are selected for the media path, i.e. for the communication (i.e. the first UE is set to be reached by the first ground UPF's GUA and the second UE is set to be reached by the second ground UPF's GUA), i.e. the data (e.g. media) is via the UPFs on ground (i.e. the local media routing in the satellite(s) is not applied).

As mentioned above, a GUA may also be assigned to the satellite instead of an ULA. Still, the ICE connectivity check of a UE fails if there is no direct connectivity between the GUA address assigned to the L-UPF satellites and the GUA address assigned to the ground UPF, .e.g. the direct connectivity is prevented e.g. in firewalls, since there is no connectivity between the data network behind the UE's ground UPF and the satellite transport network hosted by the satellite operator.

It is optional for the UE (i.e. it depends on UE configuration) whether to use STUN (Session Traversal Utilities for Network Access Translators) and TURN (Traversal Using Relays around Network Address Translators). The UE thus for example has only two (host) ICE candidates: one IPv6 ULA assigned to the local (satellite) UPF and one IPv6 GUA assigned to the ground UPF.

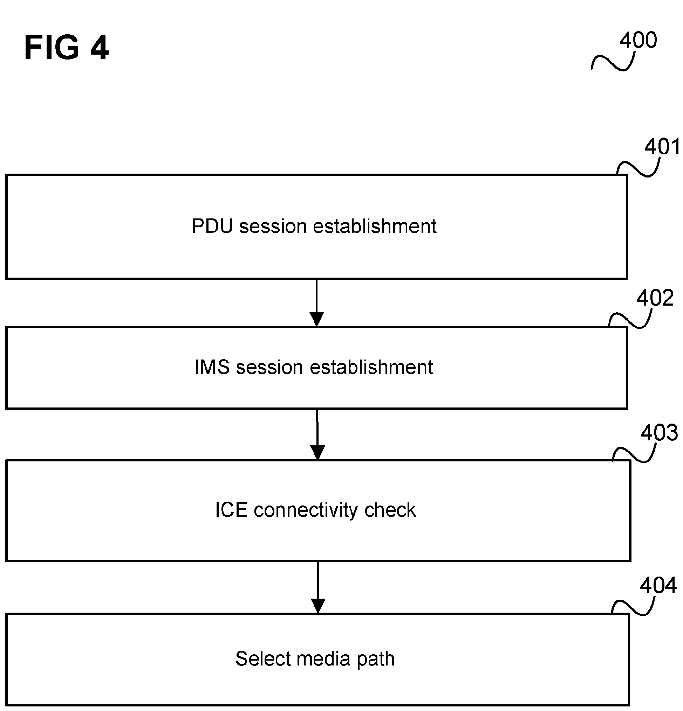

Figure 4 illustrates a setup of a communication between two mobile terminals 201, 202 according to an embodiment.

In 401, PDU session establishment is performed for each UE 211, 212. This includes an assignment of an ULA (in the local UPF 214, 215 of the respective UE's serving satellite 203, 204) and a GUA (in the respective UE's serving satellite ground UPF 209, 210).

In 402, IMS session establishment and ICE candidate negotiation are performed via SDP Offer and Answer messages. If the P-CSCF 218, 219 of a UE 211, 212 needs to assign an AGW (IMS Access Gateway), it allocates one AGW in the UE's serving satellite and an AGW in the ground network.

In 403, an ICE connectivity check is performed via the network-to-network interface (NNI) between the first IMS 216 and the second IMS 217 (to check possible connectivity over the satellites for UE-SAT-UE communication).

If the originating P-CSCF 218 assigns the AGWs, it acts as ICE controlling agent via the NNI with respect to (i.e. for connectivity checks directed to) the respective remote network, i.e. the second IMS 217 from the point of view of the first IMS 216. If the terminating P-CSCF 219 assigns AGWs itself, it acts as ICE controlled agent with respect to the first IMS 216 and as ICE controlling agent with respect to the local UE 212. If both originating P-CSCF 218 and terminating P-CSCF 219 assigned the AGWs, then both P-CSCF perform the ICE connectivity check with the peer P-CSCF. For the candidate pairs where the connectivity checks succeeded between the AGWs, the P-CSCF that is acting as a controlling agent with the remote network nominates the candidate pair that has the highest priority among the succeeded pairs. It is assumed that the candidate pairs via satellite accesses have higher priority than the candidate pairs via ground access. It should be noted that in case neither P-CSCF 218, 219 assigns AGWs, the ICE connectivity check is done transparently between the SIP clients in the UEs. However, it is assumed in the present embodiment that at least one of the P-CSCF 218, 219 assigns AGWs. Accordingly, it is assumed that at least one P-CSF is acting as an ICE controlling agent and performs the connectivity check.

In 404 the P-CSCF 218, 219 which is acting as an ICE controlling agent (which may be one of the P-CSCFs 218, 219) to the remote network decides whether the media routing is routed directly via the satellites 203, 204 and the satellite AGW(s) (i.e. the AGW(s) implemented in the satellite), or via the ground network 208 and the ground AGW(s).

The P-CSCF 218, 219 nominates the corresponding AGW IP addresses to both session legs, i.e. to the respective path to the remote network via NNI and to the local UE (which it serves).

Figure 5 illustrates the ICE connectivity check from a user plane perspective.

As in the scenario of figure 2, a first UE 501 is served by a first satellite 502 implementing a local UPF 503 and a second UE 504 is served by a second satellite 505 implementing local UPF 506. The two satellites 505, 506 are connected via a transport network 507. A ground network 508 includes a ground UPF 509 for the first UE 501 and a ground UPF 510 for the second UE 504.

According to various embodiments, the following is carried out.
1) In PDU session establishment, each UE 501, 504 is assigned two IPv6 addresses as described (one hosted in the serving satellite's local UPF 503, 506 and another hosted in the UE's ground UPF 509, 510). The first UE1 501 is in this example assigned "ULA1" and "GUA2" and the second UE is in this example assigned "ULA2" and "GUA2".
2) For IMS call setup, the originating UE (assumed to be the first UE 501 here) sends an INVITE with SDP Offer to the P-CSCF 218 (of its IMS). The first UE (acting as SIP client) 501 uses the ICE procedures to provide both the ULA and GUA addresses in the SDP offer.
3) The originating P-CSCF 218 (i.e. the originating UE's P-CSCF) assigns (i.e. allocates) one AGW 511 on the ground (denoted by Ground-AGW) and another AGW 512 in its serving satellite 505 (denoted by Satellite-AGW). For this, for example, it discovers the Satellite-AGW e.g. based on Satellite ID (and Constellation ID) of the served UE or based on the IP realm of the UE IP address.
4) The originating P-CSCF 218 instructs the AGWs 511, 512(it has assigned) to reserve media resources for each media line towards the remote network.
5) The originating P-CSCF 218 sends an INVITE with SDP offer towards the remote network. The SDP offer contains one IP address candidate from the Satellite-AGW 512, and another IP address candidate from Ground-AGW 511. In figure 5, these IP addresses are denoted by "IPs12" and "IPg12".
6) The terminating P-CSCF 219 (i.e. the P-CSCF serving the terminating UE) assigns (i.e. allocates) one AGW 513 on the ground and another AGW 514 in its serving satellite 506.
7) The terminating P-CSCF 219 instructs the AGWs 513, 514 to reserve media resources for each media line towards the originating IMS (i.e. the IMS of the originating UE).
8) The terminating P-CSCF 219 sends an INVITE with SDP offer towards the local SIP client (i.e. the UE that it serves). The SDP offer contains one ICE candidate from Satellite-AGW 514 and another ICE candidate from Ground-AGW 513. In figure 5, these IP addresses are denoted by "IPs22" and "IPg22".
9) The SDP answer from the terminating UE 504 is processed in similar manner on the originating side as the SDP offer on the terminating side: the originating P-CSCF 218 informs each of its assigned AGWs 511, 512 about the received ICE candidates from the terminating side. In figure 5, these IP addresses are denoted by "IPs21" and "IPg21". Further, the originating P-CSCF 218 informs the originating UE 501 about the IP addresses of the originating AGWs 511, 512. In figure 5, these IP addresses are denoted by ''IPs11" and "IPg11".
10) As a result, four candidate pairs (i.e. IP address pairs) are negotiated for each leg (i.e. hop) in the IMS session:
   a. originating UE - originating P-CSCF leg:
      i. ULA1 - IPs11
      ii. ULA1 - IPg11
      iii. GUA1 - IPs11
      iv. GUA1 - IPg11
   b. originating P-CSCF - terminating P-CSCF leg:
      i. IPs12 - IPs21
      ii. IPs12 - IPg21
      iii. IPg12 - IPg21
      iv. IPg12 - IPs21
   c. terminating P-CSCF - terminating UE leg:
      i. ULA2 - IPs22
      ii. ULA2 - IPg22
      iii. GUA2 - IPs22
      iv. GUA2 - IPg22

Assuming that direct routing between satellite and ground hosted IP addresses is not possible (prevented e.g. in firewalls), only two candidate pairs can succeed the ICE connectivity check (wherein it is assumed that there is satellite-satellite connectivity, so these two candidate pairs succeed):
ICE candidate pairs for LTE1
   - ULA1 - IPs11 (succeeds)
   - ULA1 - IPg11 (fails)
   - GUA1 - IPg11 (succeeds)
   - GUA1 - IPs11 (fails)
ICE candidate pairs between P-CSCFs:
   - IPs12 - IPs21 (succeeds)
   - IPs12 - IPg21 (fails)
   - IPg12 - IPg21 (succeeds)
   - IPg12 - IPs21 (fails)
ICE candidate pairs for LTE2:
   - ULA2 - IPs22 (succeeds)
   - ULA2 - IPg22 (fails)
   - GUA2 - IPg22 (succeeds)
   - GUA2 - IPs22 (fails)

If the satellite candidate pairs succeed (i.e. ULA1 - IPs11, IPs12 - IPs21, and ULA2 - IPs22; it should be noted that ULA1 - IPs11 and ULA2 - IPs22 can be expected to succeed but IPs12 - IPs21 do not necessarily succeed, e.g. due to disadvantageous satellite location), these pairs are selected over the ground pairs by the P-CSCFs (i.e. UE-SAT-UE communication is carried out). The satellite pairs will fail (as a whole) if the UEs reside on different satellites and ISL is not available. In this case, the P-CSCFs select the ground pairs.

It should be noted that each P-CSCF decides independently whether to allocate AGWs depending on the need to anchor the (audio or video) media , e.g. a P-CSCF may allocate AGW if legal interception is required for the session. If a P-CSCF does not allocate AGWs, the P-CSCF passes the ICE candidates transparently from/to the next hop, i.e., for example, if the first UE's P-CSCF has not allocated the AGWs 511, 512, the ICE connectivity check is done for the candidate pairs ULA1 - IPs21, ULA1 - IPg21, GUA1 - IPs21 and GUA1 - IPg21.

Both UEs 501, 502 act as ICE controlled agents (if the originating P-CSCF 218 assigns the AGWs 511, 512). If a P-CSCF assigns AGWs, the P-CSCF has two ICE roles; one role towards local UE and another role towards the remote network. If the originating P-CSCF 218 assigns AGWs, it acts as a controlling agent for both directions. In this case, if the terminating P-CSCF 219 assigns AGWs, it acts as controlled agent towards originating P-CCSF 218, and as a controlling agent towards its local UE 212. The initiating ICE agent that is next to the Satellite TN 507 takes the controlling role. If the originating P-CSCF 218 assigns the AGWs 511, 512, the P-CSCF 219 has that role. Otherwise, the originating UE 501 has that role.

According to one embodiment, the originating P-CSCF 218 acts as an ICE controlling agent towards both legs of the IMS session. This means that the originating P-CSCF 218 can force that the same AGW is selected for a call leg towards the originating UE 501 and towards the remote (i.e. terminating) P-CSCF 219. The terminating P-CSCF 219 waits for the ICE nomination (USE-CANDIDATE attribute in a STUN request) from the originating network (P-CSCF 219 is informed by the AGW that receives the nomination via STUN). After receiving the nomination, the terminating P-CSCF 219 selects the corresponding AGW (i.e. either Satellite-AGW 514 or Ground-AGW 513), and instructs the corresponding AGW to nominate the AGW IP address towards the terminating UE 502. The originating P-CSCF 218 instructs the AGWs 511, 512 to perform the ICE connectivity check towards the terminating network (e.g. as described in 3GPP TS 24.229), acting as a controlling agent. As mentioned above, if the ICE connectivity check succeeds with the Satellite-hosted IP address pair, this pair is selected, otherwise the ground-hosted IP address pair is selected. The originating P-CSCF 218 selects the corresponding AGW (i.e. either Satellite-AGW 512 or Ground-AGW 511) and nominates the corresponding AGW IP addresses towards the originating UE 501 and remote (i.e. terminating) network.

In the example described above with reference to figure 5, the Satellite-AGW 512 informs the originating P-CSCF 218 that the connectivity check succeeded with the Satellite-AGW 514, and the Ground-AGW 511 informs the originating P-CSCF 218 that the connectivity check succeeded with Ground-AGW 513. Other candidate pairs failed. The originating P-CSCF 218 instructs the Satellite-AGW 512 to send a STUN request with USE-CANDIDATE set to Satellite-AGW 514. Satellite-AGW 514 informs the terminating P-CSCF 219 that the candidate IPs12-IPs21 pair is nominated (to be used for communication between the mobile terminals 501, 502). The terminating P-CSCF 219 instructs the Satellite-AGW 514 to send a STUN request with USE-CANDIDATE set to the second UE 502, i.e. it informs the second UE 502 that the candidate IPs22-ULA2 pair is nominated.

It should be noted that according to various embodiments, ICE procedures are applied on leg-by-leg basis, e.g. if the terminating P-CSCF 219 does not need to allocate an AGW, the ICE runs between the originating P-CSCF 218 or AGWs 511, 512 on the originating side and the terminating UE 502.

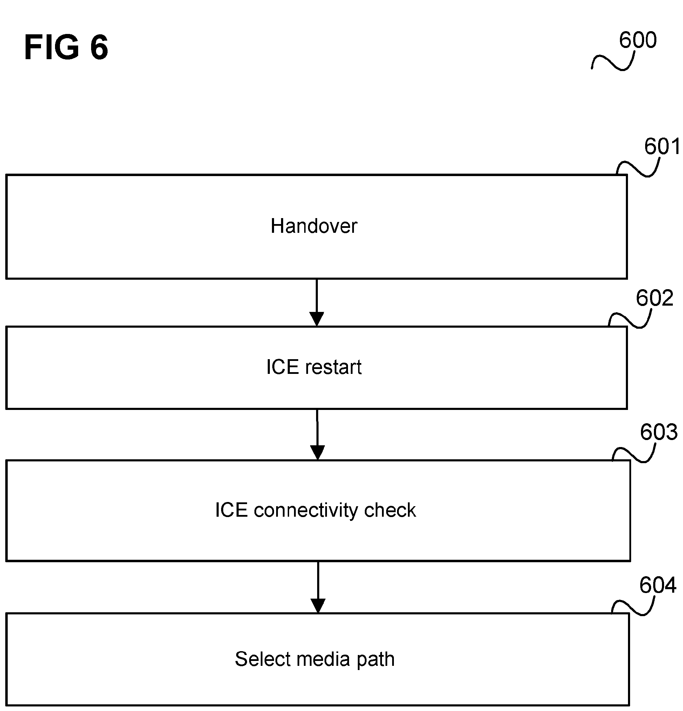

Figure 6 illustrates a mobility procedure for a mobile terminal in a scenario as illustrated in figure 2 and figure 3. The mobile terminal is assumed to correspond to the first mobile terminal 201, 301 in figure 2 and figure 3.

In 601, a mobile terminal 211, 301 leaves coverage of a satellite and enters coverage of a (target) satellite (assumed to be the first satellite 203, 302), an Xn or N2-based handover is performed. The same applies if the UE is stationary, but the satellite is moving so that the UE loses the coverage. The SMF 304 selects a local UPF 305 of the target satellite 203, 302 (e.g. based on gNB ID). The first mobile terminal 211, 301 gets a new ULA address from the local UPF 305 of the target satellite 203, 302.

In 602, the first mobile terminal 211, 301 generates an ICE restart: the first mobile terminal 211, 301 sends an SDP offer in a Re-INVITE with the new ULA address. The P-CSCF of the first mobile terminal 211, 301 discovers a new AGW of the target satellite 203, 302. The second mobile terminal 212 (i.e. remote UE) receives the SDP offer in the Re-INVITE, carrying the IP address of the new AGW.

In 603, ICE connectivity checks are performed as in the original IMS session setup (as described with reference to figures 4 and 5), but with the new ULA address and target satellite AGW addresses.

In 604, the user plane data (i.e. media) is switched to use the new media path. The ICE controlling agent nominates either the IP address of the Satellite AGW or Ground AGW to both legs of the session (as in the IMS session setup described with reference to figures 4 and 5).

So, in a 3GPP system, when a UE 211, 301 changes serving satellite (from a source satellite to a target satellite), a handover is performed, e.g. in a conventional manner, for example following the 3GPP procedure, as for example shown in Figure 4.3.5.3-1 of 3GPP TS 23.502, where UPF1 is located in the source satellite and UPF2 in the target satellite, except that the PDU Session also has a third UPF located on the ground (i.e. the ground UPF).

The UE 211, 301 is assigned a new IPv6 prefix from the target satellite (ULA address that is hosted in the target satellite's local UPF). Further, the UE is assigned a new IPv6 prefix in IPv6 Router Advertisement (e.g. corresponding to the IPv6 Prefix Configuration according to 3GPP, see step 10 in Figure 4.3.5.3-1 in TS 23.502), and the SIP client in the UE is notified for the new IPv6 (ULA) address.

The UE 211, 301, in its role as SIP client, initiates an ICE restart as described in RFC 8445: the client sends a new SDP Offer in Re-INVITE with the new IPv6 prefix (ULA) as a candidate for the media stream(s). The candidate pairs are determined, and a connectivity check is performed as in the initial IMS call (as described with reference to figures 4 and 5). According to RFC 8445, the only difference between an ICE restart and a brand-new data session is that during the restart, data can continue to be sent using existing data sessions, and a new data session always requires the roles to be determined.

It should be noted that during the handover procedure, the UE 211, 301 has simultaneously two ULA IP addresses for the same PDU Session (on the local UPF of the source satellite and the local UPF of the target satellite). Therefore, it is not required for the UE 211, 301 to re-establish the PDU Session due to serving satellite and local UPF change.

It should further be noted that the GUA address is hosted in the ground UPF. Therefore, it does not change due to change of serving satellite. This means that the UE 211, 301 does not need to re-register to the IMS due to change of serving satellite (as it would if the UE IP address that is used for SIP signalling changed).

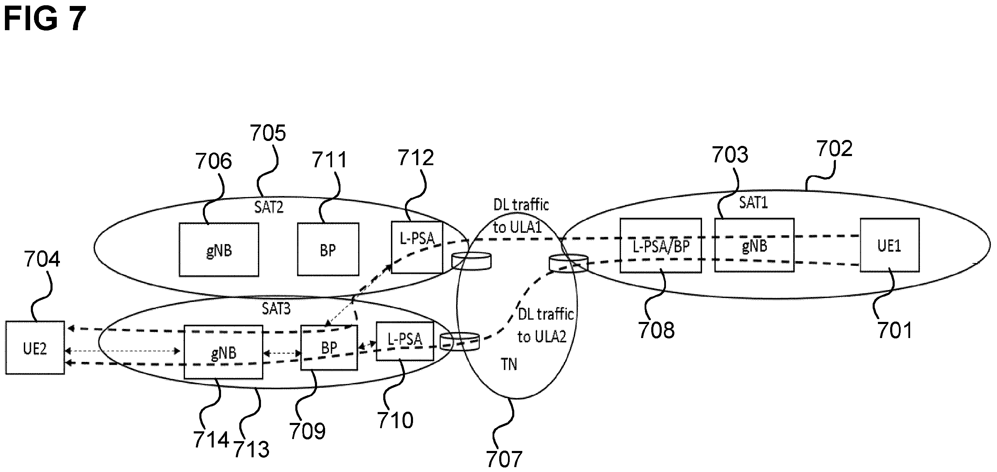

Figure 7 illustrates a change of a serving satellite for a mobile terminal (e.g. corresponding to the second mobile terminal 212 in figure 2).

As in the scenario of figure 2, the first UE 701 (now shown on the right side) is served by a first satellite 702 implementing a first base station 703 and a first local UPF 708 implementing a first BP and a first L-PSA and a second UE 704 (now shown on the left side) is (before the handover) served by a second satellite 705 (the source satellite in the present example) implementing a second base station 706 and a second local UPF implementing a second BP 711 and a second L-PSA 712. The two satellites 705, 706 are connected via a transport network 707.

The second UE 702 moves and therefore changes its serving satellite from the second satellite 705 to a third satellite 713 (the target satellite in the present example). The third satellite 713 implements a third base station 714 and a third local UPF implementing a third BP 709 and a third L-PSA 710. The third satellite 713 is connected to the second satellite 706 via the transport network 707.

In this example, AGWs are not used.

If the connectivity check succeeds with the new ULA address (ULA2) it gets from the third local UPF, the second UE 702 begins to send UL media from the new address (ULA2). Based on this IP address, the third BP 709 in the third satellite 713 routes the UL traffic to the third L-PSA 710 in the third satellite 713. The last UL packets using the old IP address (ULA1) are routed from the second 711 BP to the second L-PSA 712 in the second satellite 706. After a timeout, the SMF serving the second UE 704 releases the second UPF (BP+L-PSA) in the second satellite 706 (e.g. with an N4 Session Release Request, acknowledged with an N4 Session Release Response, according to 3GPP).

If the ICE connectivity check fails for the new ULA address of the second mobile terminal UE 704 (ULA2), the GUA address is nominated for data (i.e. media) transmission. This may occur for example when the target satellite 713 does not belong to the same satellite constellation as the first satellite 702 and the second satellite 705, or an ISL is not available between the second satellite 705 and the third satellite 713. In that case, the media is routed via ground UPFs.

So, according to various embodiments, the moving UE is assigned a new IP address. This triggers an ICE restart procedure in the UE: the UE sends a Re-INVITE with an SDP offer that contains the new UE IP address. The P-CSCF detects the change of the satellite (e.g. queries the PCF for the access network information as in prior art) and assigns a new AGW from the target satellite. P-CSCF uses the new AGW in the SDP offer towards the remote network and in the SDP answer towards the local UE.

It is possible that the direct IP connectivity is lost between originating satellite 502 (i.e. the originating UE's serving satellite) and the terminating satellite 505 (i.e. the terminating UE's serving satellite) in middle of a communication session (e.g. IMS audio/video call). This occurs when the satellites lose the ISL 213 (i.e. the transport network 507) in between. According to RFC 8445, an agent must send a keepalive on each candidate pair that is used for sending data if no packet has been sent on that pair in the last Tr seconds. Agents should use a Tr value of 15 seconds. Agents may use a bigger value but most not use a value smaller than 15 seconds. RFC 8445 assumes the keepalive is only to refresh the NAT binding and does not describe what the client should do if it does not receive response to the keepalive request.

According to various embodiments, a UE 501, 502 or AGW 512, 514 detects that the media path is broken e.g. based on keepalives, or inactivity in RTP(real-time protocol)/RTCP (real-time control protocol). In case an AGW 512, 514 detects the loss, it reports the loss of media to the respective P-CSCF 218, 219.

When the ICE agent (UE 211, 212, 501, 504 or P-CSCF 218, 219) detects that the media path is broken, it initiates an ICE restart, where it does not include the candidate IP address that failed (hosted in the Satellite-UPF or Satellite-AGW) in the SDP offer but includes the IP address assigned to the ground path (i.e. the GUA, e.g. GUA1, in the example of figure 5). As a result, the media path via the ground UPFs 509, 510 is selected (i.e. nominated to be used for communication). The entity that determines the connectivity is lost sends the re-invite, i.e. a mobile terminal 211, 211, 501, 504 as well as a P-CSCF 218, 219 can send the SDP offer including the ground path IP. In case that this is done by a P-CSCF, it sends the re-INVITEs to both directions, i.e. to local UE and to the remote network. After the SDP offer-SDP answer exchange is completed, both ends start ICE connectivity checks for the remaining address pair (i.e. for the ground path) as described above. If that succeeds, the P-CSCF (acting as a controlling agent) nominates the ground addresses.

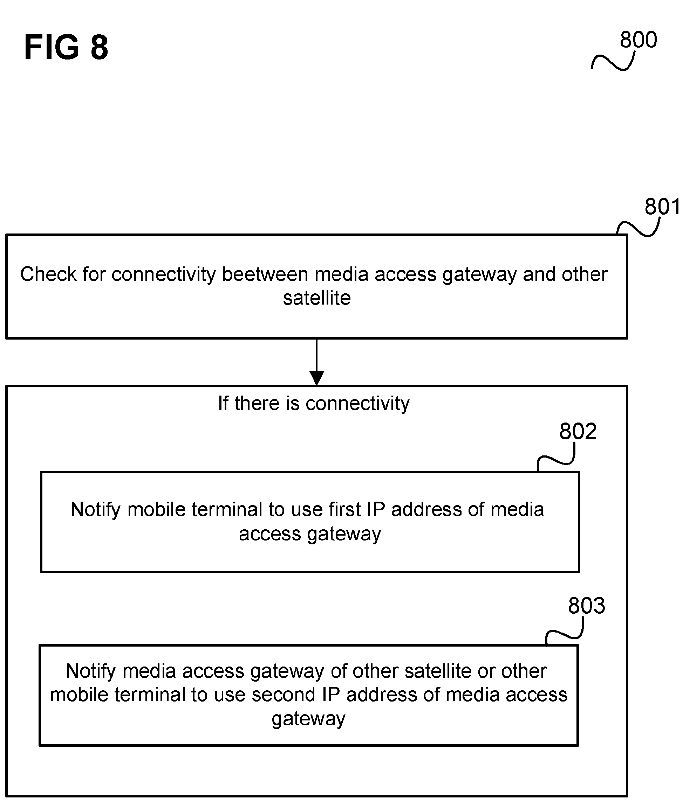

In summary, according to various embodiments, a method is provided as illustrated in figure 8.

Figure 8 shows a flow diagram 800 illustrating a method for providing communication between a first mobile terminal served by a first satellite and a second mobile terminal served by a second satellite according to an embodiment.

It is assumed that the first satellite implements a first media access gateway (and, for example, a ground network implements a second media access gateway).

In 801, it is checked whether there is connectivity between the first media access gateway and the second satellite (i.e. a connectivity check is performed, e.g. an ICE connectivity check). The check is for example performed by sending a message (e.g. an IP packet) for which a response (e.g. another IP packet) is received in case there is connectivity, i.e. the check is performed via a message exchange which is successful in case there is connectivity and is not successful in case there is no connectivity).

In response to a detection that there is connectivity between the first media access gateway and the second satellite
- the first mobile terminal is set in 802 to use a first Internet Protocol address (IPs11 in the example of figure 5) of the first media access gateway under which the first mobile terminal can reach the first media access gateway for communication with the second mobile terminal (for communication with the second mobile terminal) and
- a second media access gateway implemented in the second satellite (if there is one implemented in the second satellite) or the second mobile terminal (if the second media access gateway is not implemented) is set in 803 to use a second Internet Protocol address (IPs12 in the example of figure 5) under which the first media access gateway can be reached via the second satellite (for communication with the first mobile terminal).

In other words, according to various embodiments, a scenario where a media access gateway is set up is considered. For example, a P-CSCF may need to assign a media anchor (AGW) to the media path. This is needed e.g. for legal interception. The P-CSCF allocates the AGWs from the satellite and from the ground as described in the above embodiments. One P-CSCF that assigns an AGW becomes an ICE controlling agent with the remote network's P-CSCF. P-CSCF and/or AGWs in both networks perform ICE connectivity checks with the respective peer network.

If the connectivity check(s) succeeds with the Satellite AGWs, the P-CSCF that is acting as an ICE controlling agent with the remote network selects the Satellite-AGW, and nominates the AGW IP addresses towards the local UE and the terminating UE.

Accordingly, UE-SAT-UE communication (i.e. local media routing) can be provided if the involved satellites are connected. For example, for IMS audio or video calls, means for the UE and IMS network (P-CSCF) are provided to determine whether to use the user plane entities (UPF, AGW) from satellite or ground for media routing.

The connectivity check is for example performed a component having assigned the first media access gateway and the second media access gateway, e.g. a P-CSCF as in the examples described above, or the first media access gateway itself (or possibly also the second media access gateway).

The setting of a component (e.g. the first mobile terminal and the first media access gateway) to use a certain IP address may include notifying that component to use that IP address by the component having performed the connectivity check, e.g. by an ICE controlling agent, e.g. a P-CSCF (i.e. the component which has assigned the media access gateways (in the satellite and on the ground)).

It should be noted that the method of figure 8 may be mirrored by the peer side, i.e. be carried similarly for the second mobile terminal (e.g. by a second P-CSCF serving the second mobile terminal).

The connectivity check may for example be carried out following a handover.

The method of figure 8 may be carried out by a communication system component (in particular a communication control component, which may comprise multiple interconnected sub-components - in particular, the method may at least in part be performed by the first mobile terminal and/or the second mobile terminal) which may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for providing communication between a first mobile terminal served by a first satellite and a second mobile terminal served by a second satellite wherein the first satellite implements a first media access gateway, the method comprising:
checking whether there is connectivity between the first media access gateway and the second satellite; and
in response to a detection that there is connectivity between the first media access gateway and the second satellite
setting the first mobile terminal to use a first Internet Protocol address of the first media access gateway under which the first mobile terminal can reach the first media access gateway for communication with the second mobile terminal; and
setting a second media access gateway implemented in the second satellite or the second mobile terminal to use a second Internet Protocol address under which the first media access gateway can be reached via the second satellite.

2. The method of claim 1, wherein the checking whether there is connectivity comprises sending a first Internet Protocol packet from the second Internet Protocol address of the first media access gateway to the second media access gateway or the second mobile terminal and, in case there is connectivity between the first media access gateway and the second satellite receiving a second Internet Protocol packet as a response to the first Internet Protocol packet from the second media access gateway or the second mobile terminal.

3. The method of claim 1 or 2, comprising implementing the first media access gateway in the first satellite.

4. The method of any one of claims 1 to 3, comprising implementing the first media access gateway in the first satellite in response to a request for a communication session between the first mobile terminal and the second mobile terminal.

5. The method of claim 4, comprising implementing the first media access gateway in the first satellite depending on requirements of the communication session.

6. The method of claim 4 or 5, wherein the communication session is an Internet Multimedia Subsystem session.

7. The method of any one of claims 1 to 6, comprising assigning the first Internet Protocol address and the second Internet Protocol address to the first media access gateway.

8. The method of any one of claims 1 to 7, comprising, in response to a detection that there is no connectivity between the first media access gateway and the second satellite,
setting the first mobile terminal to use a third Internet Protocol address of a third media access gateway implemented in a ground network under which the first mobile terminal can reach a third media access gateway for communication with the second mobile terminal; and
setting a fourth media access gateway or the second mobile terminal to use a second Internet Protocol address under which the third media access gateway can be reached via the ground network.

9. The method of claim 8, wherein the ground network implements the fourth media access gateway and the method comprises, in response to a detection that there is no connectivity between the first media access gateway and the second satellite, setting the second mobile terminal to use a fifth Internet Protocol address of the fourth media access gateway under which the second mobile terminal can reach the fourth media access gateway for communication with the first mobile terminal and setting the third media access gateway to use a sixth Internet Protocol address under which the fourth media access gateway can be reached via the ground network.

10. The method of any one of claims 1 to 9, wherein the checking includes performing an Interactive Connectivity Establishment connectivity check.

11. The method of claim 10, wherein the Interactive Connectivity Establishment connectivity check includes a candidate pair comprising the first Internet Protocol address of the first media access gateway and an Internet Protocol address of the second media access gateway or an Internet Protocol address of the second mobile terminal.

12. The method of any one of claims 1 to 11, wherein checking whether there is connectivity between the first media access gateway and the second satellite includes checking whether there is connectivity between the first media access gateway and the second satellite via an inter-satellite link between the first satellite and the second satellite.

13. The method of any one of claims 1 to 12, wherein the second satellite implements the second media access gateway and the method comprises checking whether there is connectivity between the second media access gateway and the first media access gateway and, in response to a detection that there is connectivity between the second media access gateway and the first media access gateway, setting the second mobile terminal to use a seventh Internet Protocol address of the second media access gateway under which the second mobile terminal can reach the second media access gateway for communication with the first mobile terminal; and setting the first media access gateway to use an eighth Internet Protocol address under which the second media access gateway can be reached by the first media access gateway.

14. A communication control component configured to perform the method of any one of claims 1 to 13.

15. The communication control component of claim 14, wherein the communication control component is a Proxy Call Session Control Function.
